(19) Europäisches Patentamt

European Patent Office

Office européen des brevets

(11) **EP 1 408 636 A2**

(12) **EUROPEAN PATENT APPLICATION**

(43) Date of publication:
**14.04.2004 Bulletin 2004/16**

(51) Int Cl.⁷: $H04J\ 3/06$

(21) Application number: **03255202.8**

(22) Date of filing: **21.08.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **24.09.2002 GB 0222143**

(71) Applicants:
  • **Mitel Knowledge Corporation**
    **Kanata, Ontario K2K 2W7 (CA)**
  • **The University of Ottawa**
    **Ottawa, Ontario K1N 6N5 ON (CA)**

(72) Inventors:
  • **Cheng, Brian**
    **Stittsville, Ontario, K2S 1E5 (CA)**
  • **Yang, Oliver**
    **Orleans, Ontario, K4A 1X9 (CA)**

(74) Representative: **Read, Matthew Charles**
    **Venner Shipley & Co.**
    **20 Little Britain**
    **London EC1A 7DH (GB)**

(54) **Method for adaptive and predictive playout for packet voice application**

(57) An adaptive predictive playout scheme, based on a Least Mean Square (LMS) prediction algorithm, for packet voice applications. The packets are received and stored in a buffer for playout at a constant draining rate P0, where P0 is determined by the codec used. The latency of the packets in the buffer is controlled by discarding the oldest packet in the buffer when the predicted time interval for receipt of the next incoming packet is less than a draining threshold.

**Description**

Field of Invention

This invention relates to voice packet playout schemes and in particular to an Adaptive Predictive Playout Scheme for Packet Voice Applications.

Background of the Invention

The revolution in high-speed communication networks, an example of which is the Internet, has given rise to the potential for enabling the deployment of multimedia applications. These applications, however, require stringent quality of service (QoS) guarantees, such as bounded delay and jitter. The current Internet was originally designed to offer best effort service without any QoS guarantees. In such a packet switching environment, the delay of each packet varies greatly due to the complexities of the network traffic and to the traffic scheduling algorithms implemented for efficient utilization of bandwidth. Voice data or speech packets are generally considered to be transported at a variable bit rate (VBR). As a result, the problem of unbounded jitter, introduced by the networks, often renders the speech unacceptable or even unintelligible. It thus becomes essential to offer control mechanisms to obtain distinctive QoS guarantees.

Essentially, voice applications can be broadly classified as either interactive or unidirectional. Serving dissimilar purposes, these two classes of applications differ in playout delay requirements and the tolerances for playout impairment. Interactive voice applications are more sensitive to playout delay than playout impairment due to their real-time nature. It is therefore acceptable in interactive voice applications to trade some playout impairment for better playout delay.

Methods of buffering packets at the receiver end have been extensively studied. Such prior art methods include I-Policy and E-Policy [W.E. Naylor and L. Kleinrock, "Stream Traffic Communication in Packet Switched Networks: Destination Buffering Considerations", IEEE Transactions on Communications, Vol. COM-30, No.12, Dec 1982; and D.L. Stone and K. Jeffay, "An Empirical Study of Delay Jitter Management Policies", Multimedia System, pp. 267-279, Vol. 2, No.6, Jan 1995]. However, these schemes do not adapt to traffic conditions, such as delay and jitter, which may vary from time to time. Adaptive playout schemes have also been proposed based on an assumption that the level of traffic conditions like delay jitter for the near future can be estimated in terms of the observed level in the recent past [D.L. Stone and K. Jeffay, "An Empirical Study of Delay Jitter Management Policies", Multimedia System, pp.267-279, Vol. 2, No.6, Jan 1995].

It is therefore an aspect of an object of the invention to provide a control mechanism for improving the utilization of resources and for optimizing service performance.

Summary of the Invention

According to an aspect of the invention, there is provided an adaptive predictive playout scheme, based on a Least Mean Square (LMS) prediction algorithm, for packet voice applications. The packets are received and stored in a buffer for playout at a constant draining rate P0, where P0 is determined by the codec used.

When the number of packets in the buffer is greater than L0, the arrival interval of the next incoming packet is predicted based the LMS prediction algorithm. If the estimated arrival interval for the next packet is smaller than a draining threshold D0, then the next packet is predicted to arrive at the destination relatively early and thus is predicted to be buffered relatively longer than the previously received packets. However, if the oldest packet in the buffer is discarded, then the latency (time of packet in the buffer) of the next packet is expected to be reduced, but without increasing the probability of causing a gap as there are a number of packets in buffer queue.

If, however, the prediction for the next packet arrival interval is greater than the draining threshold D0, then this next packet is expected to arrive at a time when all of the packets have been played out, thus no packets are needed to be discarded. With such a prediction, the receiver continues to play out the remaining packets provided that the maximum acceptable playout latency is not exceeded. After the playout of the last packet of the talkspurt, or in the event that no packet has arrived for some time since the arrival of the last packet, the talkspurt playout is finished. The receiver starts or resets to playout the next talkspurt.

Brief Description of the Drawings

In the accompanying drawings:

Figure 1 is a time-line diagram illustrating voice source behavior;

Figure 2 is a block diagram illustrating a linear predictor according to the invention;
Figure 3 is a block diagram illustrating an adaptive linear predictor according to the invention;
Figure 4 is a flowchart illustrating LMS prediction algorithms according to the invention;
Figure 5 is a block diagram illustrating an adaptive prediction playout mechanism utilizing LMS prediction algorithms of Figure 4; and
Figures 6A and 6B are flowcharts illustrating an adaptive predictive playout scheme in accordance with Figure 5.

Detailed Description of the Preferred Embodiments

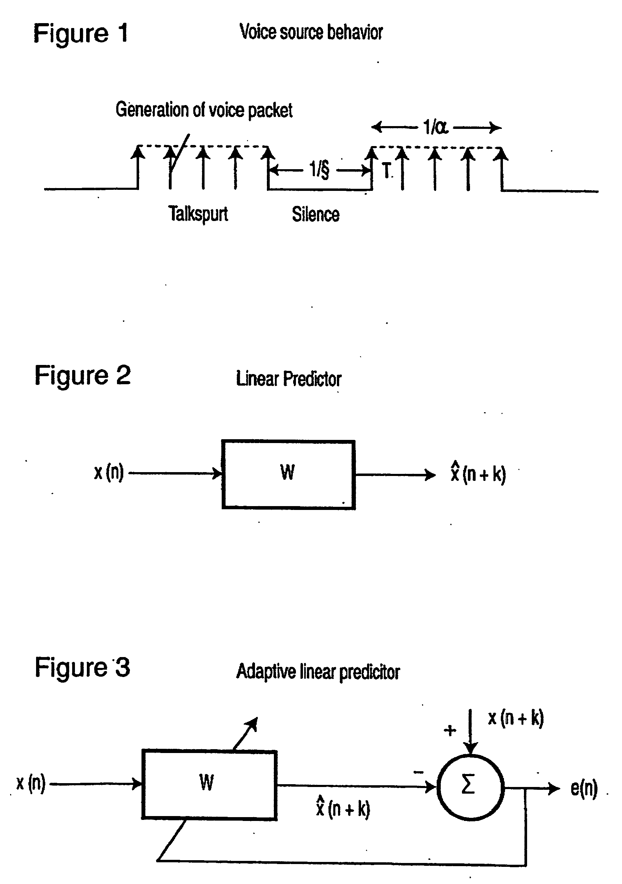

For voice data as shown in Figure 1, during a talkspurt of duration 1/a packets of speech are generated at fixed intervals T. During silence periods, no packets are generated. At the receiver end, the received constant-size voice packets are played out at a constant bit rate.

Talkspurts of speech are of relative short duration (1/a). At the receiver end, the packet arrival intervals for talkspurts are assumed to be statistically stationary. Consequently, a LMS prediction algorithm can be used to predict the packet arrival intervals.

Thus, where $x(t)(t=0,1,2...)$ denotes a series of packet arrival intervals, the problem of voice packet arrival interval series prediction involves predicting the value of x(t + $l$) from the known $x(t$-$n$ + 1), $x(t$-$n$ + 2),..., x(t) where x (n) is the most recently received packet. When $l$=1, this process is referred to as one-step prediction. The well known least mean square (LMS) error linear prediction is based on Wiener-Hopf equations, whereby a $k$-$step$ linear predictor predicts $x(n + k)$ using a linear combination of the current and previous values of $x(n)$. Thus, the $p$th-order linear prediction is obtained by the following equation:

$$\hat{x}(n + k) = \sum_{l=0}^{p-1} w(l)x(n - l) \qquad\qquad (3.1)$$

where $w(l)$ are the prediction filter coefficients, for $l$=0,1,2,...,p-1. A linear predictor is illustrated in Figure 2 where

$$w = [w(0), w(1),...w(p\text{-}1)]^{T}$$

$$x(n) = [x(n), x(n\text{-}1),...x(n\text{-} p + 1)]^{T}$$

$$e(n) = x(n + k) - \hat{x}(n + k) \qquad\qquad (3.2)$$

From equations (3.1 ) and (3.2),

$$e(n)=x(n+k)-w^{T}x(n) \qquad\qquad (3.3)$$

The optimal linear predictor in the mean square sense is the one that minimizes the mean square error $\xi$, where

$$\xi = E\{e(n)^{2}\} \qquad\qquad (3.4)$$

Since $\xi$ is a quadratic function, it has a unique minimum. Therefore, the vector **w** that minimizes $\xi$ is found by taking the gradient of $\xi$, setting it equal to zero, and then solving for **w**

$$\nabla\xi=0$$

$$\nabla\xi = \nabla E\{e(n)^{2}\} = -2E\{e(n)x(n)\} = 0$$

Substituting the value for

$$\nabla\xi = -2E\{[x(n+k) - w^T x(n)]x(n)\}= 0$$

Then

$$E\{x(n + k)x(n)\} = E\{[w^T x(n)]x(n)\} \qquad (3.5)$$

If $x(n)$ ($n=0,1,2...$) is wide-sense stationary, the correlation between $x(n)$ and x($n + k$) is only a function of k, $r_x(k)$.

$$r_x(k) = E\{x(n + k)x(n)\} \qquad (3.6)$$

From the left side of equation (3.5),

$$E\{\mathbf{x}(n)x(n+k)\} = \begin{vmatrix} r_x(k) \\ r_x(k+1) \\ \vdots \\ r_x(k+p-1) \end{vmatrix} = \mathbf{r}(k)$$

From the right side of equation (3.5),

$$E\{[\mathbf{w}^T\mathbf{x}(n)]\mathbf{x}(n)\} = E\{\mathbf{x}(n)\mathbf{x}(n)^T\}\mathbf{w}^T = \begin{vmatrix} r_x(0) & r_x(1) & \cdots & r_x(p-1) \\ r_x(1) & r_x(0) & \cdots & r_x(p-2) \\ \vdots & \vdots & \ddots & \vdots \\ r_x(p-1) & r_x(p-2) & \cdots & r_x(0) \end{vmatrix}\mathbf{w}^T = \mathbf{R_x}\mathbf{w}^T$$

where $\mathbf{w}$ is the vector of coefficients, $\mathbf{R}_x$ is a $p\times p$ Hermitian Toeplitz matrix of auto-correlations, and $\mathbf{r}$(k) is the vector of cross-correlations between predicted value $x(n+k)$ and $\mathbf{x}(n)$.
Thus,

$$\mathbf{R}_x w^T = r(k) \qquad (3.7)$$

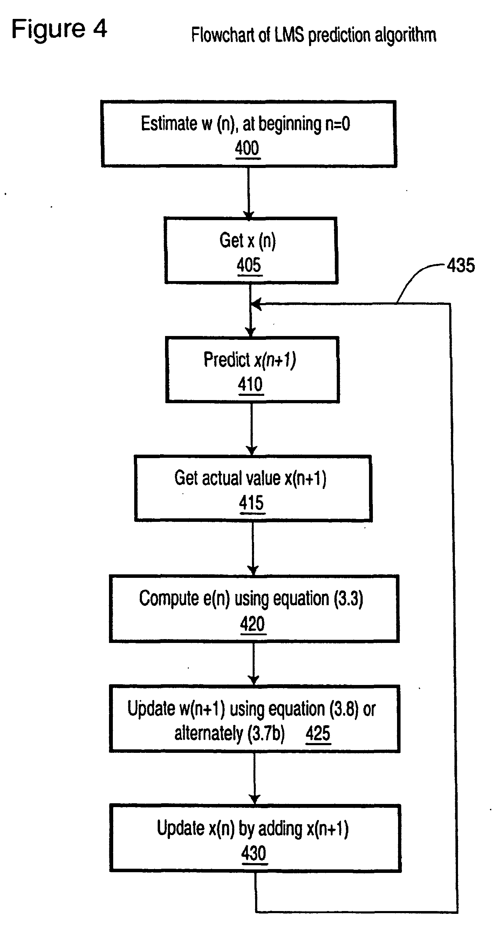

The equations in (3.7) are the Wiener-Hopf equations for linear prediction. For a one-step prediction ($k=1$), the set of linear equations in (3.6) are equivalent to the set of linear equations used to fit apth-order autoregressive (AR) process with the exception of a minus sign. The solution to the equations in (3.6) requires knowledge of the auto-correlation of $\mathbf{x}(n)$, and it also assumes that $\mathbf{x}(n)$ is wide sense stationary, i.e., the mean, variance, and auto-covariance of $\mathbf{x}(n)$ do not change with time. It also requires inverting $\mathbf{R_x}$ whose size depends on the order of linear predictor $p$.
LMS for prediction does not require any prior knowledge of the auto-correlation of a sequence. Therefore, it can be used as an on-line algorithm to predict time intervals. A signal diagram of an adaptive linear predictor is shown in Figure 3. The prediction coefficients $\mathbf{w}(n)$ are time-varying. The errors, $\{\mathbf{e}(n)\}$ are fed back and used to adapt the filter coefficients in order to decrease the mean square error. As time progresses, a $p$ number of the latest $x(n)$ is captured to predict the value of $x(n+1)$, in the manner of a sliding window over a timeline to predict the next value in terms of a few of the latest values.
The steps of a LMS prediction algorithm according to the invention are: start with an initial estimate of the filter (prediction) coefficients $\mathbf{w}(0)$; and for each new data point, compute $\nabla\xi$, where

$$\bigtriangledown\xi = -2E\{e(n)x(n)\}.$$

In practice, the statistics are not known and may change with time. Therefore, the expectation operator E is replaced with an estimate. The simplest estimate is the one point sample average e(n)$\mathbf{x}$(n). The $\bigtriangledown\xi$ is then used to update $\mathbf{w}$(n) by taking a step of size $0.5\mu$ ($\mu$ is an adaptation constant for adjusting the prediction errors) in the negative gradient. The update equations for the LMS filter coefficients are:

$$w(n + 1) = w(n) - 0.5\mu \bigtriangledown\xi$$

$$w(n +1) = w(n) + \mu e(n)x(n) \tag{3.7b}$$

If $\mathbf{x}$(n) is stationary, $\mathbf{w}$(n) converges to the mean of the optimal solution $\mathbf{R}_x\mathbf{W} = \mathbf{r}(k)$. The LMS thus converges in the mean if $1 < 1/\mu < 2/\lambda_{max}$, where $\lambda_{max}$ is the maximum eigenvalue of $\mathbf{R}_x$.

According to the invention, a normalized LMS (NLMS) is a modification to the LMS algorithm where the update equation is:

$$w(n+1) = w(n) + \frac{\mu e(n)\mathsf{x}(n)}{\|\mathsf{x(n)}\|^2} \tag{3.8}$$

where $\|\mathbf{x}(n)\|^2 = \mathbf{x}(n)^T \mathbf{x}(n)$. NLMS has the advantage over LMS of less sensitivity to the step size $\mu$. Using a large $\mu$ results in a faster convergence and quicker response to signal changes. However, after convergence, the prediction parameters have larger fluctuations. On the other hand, using a small $\mu$ results in a slower convergence, but smaller fluctuations after convergence. There is a tradeoff between faster convergence versus smaller fluctuations.

A flowchart of LMS prediction according to an embodiment of the invention is shown in Figure 4, the steps are: step 400, at the start of a talkspurt, n=0, an initial w(n) is estimated; step 405, a packet is received and a packet arrival interval x(n) is obtained; step 410, the next packet arrival interval x(n+1) is predicted or calculated; step 415, another packet is received and the next packet arrival interval x(n+1) is obtained; step 420, the error e(n) is calculated using equation (3.3); step 425, an update coefficient w(n+1) is calculated using equation (3.8) where the Normalized LMS prediction algorithm used; step 430, the LMS prediction algorithm to calculate x(n) is updated with the parameters w(n+1) and x(n+1), and the last interval parameters w(n-p+1) and x(n-p+1) are dropped; and step 435, go to step 410 until the talkspurt ends.

According to another embodiment as also shown in Figure 4, equation (3.7b) is substituted for equation (3.8) in step 425 where the LMS prediction algorithm is used.

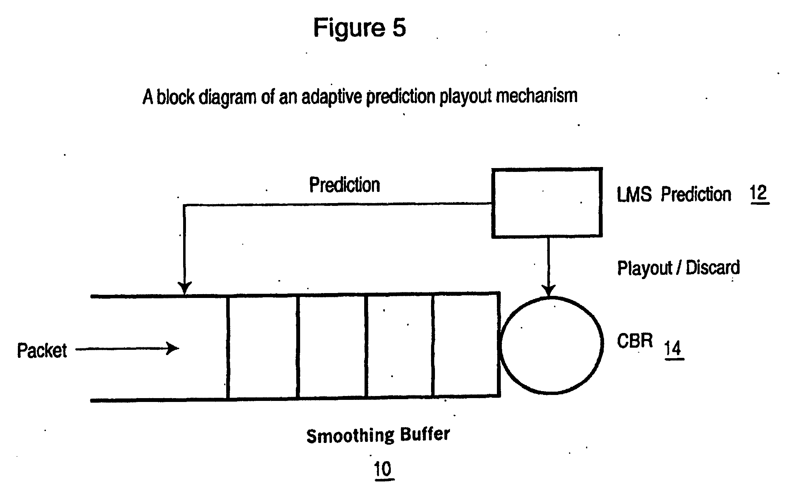

An adaptive predictive playout mechanism, based on LMS prediction of Figure 4, is shown in Figure 5. It is composed of three components: 1) a smoothing buffer 10, 2) an LMS traffic predictor 12, and 3) a CBR (Constant Bit Rate) player 14. The arriving packets are queued in the smoothing buffer 10. LMS predictor 12 employs an online algorithm as shown in Figure 4, using the normalized LMS prediction algorithm, to predict the arrival interval of next incoming packet. Based on the predicted packet arrival interval, the CBR player 14 derives an adaptive buffer delay by means of discarding the oldest packets in the buffer if necessary.

The first few packets of each talkspurt are buffered to smooth the jitter. There are two conditions for starting playout of packets: current buffer length Q is greater than the buffer threshold L0, and queuing time of the oldest packet in buffer B is greater than the maximum acceptable playout latency T0. Whenever either of these two conditions is met, the CBR player 14 starts playout of packets at a constant bit rate.

During the playout of the packets at a constant draining rate P0, where P0 is determined by the codec used to encode the talkspurt into the packets, when the number of packets in the buffer is greater than L0, the arrival interval of the next incoming packet is predicted by the LMS predictor 12. If the estimated next arrival interval is smaller than the draining threshold D0, then this packet is predicted to arrive at the destination relatively early and that this packet is predicted to be buffered relatively longer than the previously received packets. If the oldest packet in the buffer is discarded, the latency of the next incoming packet is expected to be reduced, but without increasing the probability of causing a gap as there are a number of packets in buffer queue. If the prediction of the packet arrival interval is greater than the draining threshold D0, then this packet is expected to arrive at a time when all the packets have been played out, thus no packet needs to be discarded. With such a prediction, the receiver continues to play out the remaining packets provided that the maximum acceptable playout latency is not exceeded. After the playout of the last packet of the talkspurt, or no packet has arrived for some time since the arrival of the last packet, the talkspurt playout is finished.

The receiver starts or resets to playout the next talkspurt.

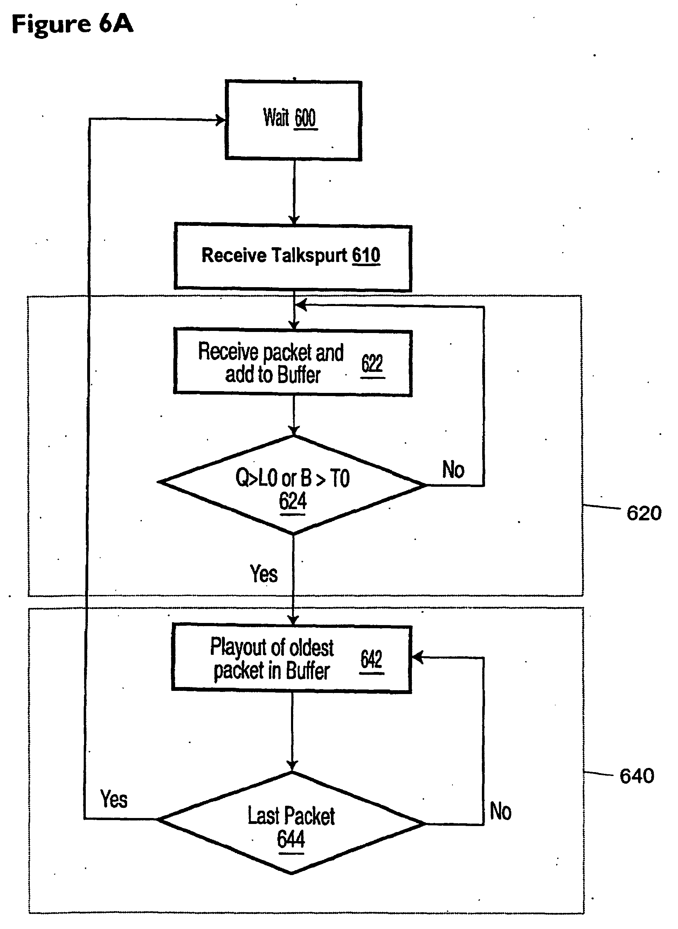

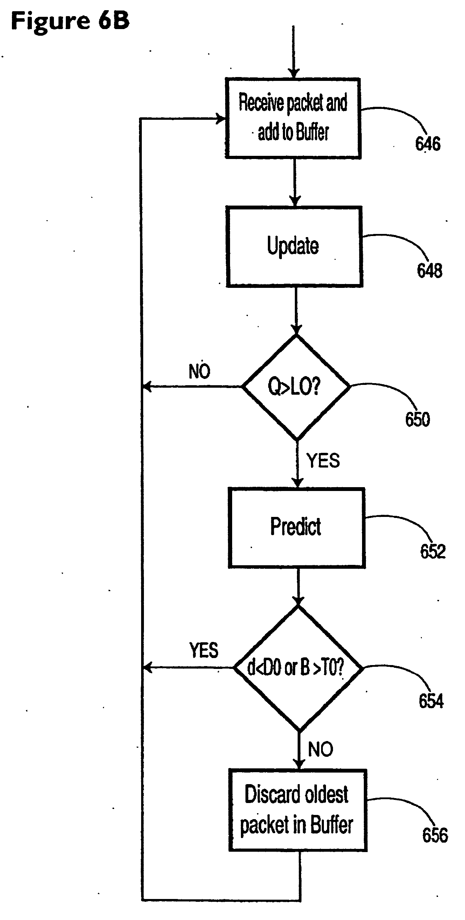

Flowcharts of the operation of the adaptive predictive playout mechanism of Figure 5 are shown in Figures 6A and 6B. The parameters B, T0, P0, D0, L0, and Q, for the mechanism are also shown. The steps of the operation are: step 600 waiting for a talkspurt; step 610, receipt of a new talkspurt; step 620, initial smoothing of the packets of the talkspurt, which comprises receiving packets 622 and holding the packets in the smoothing buffer 10 until the current buffer length Q reaches the threshold L0 or B (= Queuing time of the oldest packet in buffer) is greater than T0 (= Maximum acceptable playout latency) 624; and playout 640 of the packets in the buffer 10.

The playout 640 comprises step 642 to playout the oldest packet in buffer 10 with a constant draining rate P0 as determined by the codec used to encode the packets; step 644, the buffer length Q is checked to determined if the last packet in the buffer 10 has been playout and if played out then go to step 600 to wait for the next talkspurt; if not played out then go to step 642 to playout the next packet.

As the packets are being played out, further packets are also being received and added to the buffer 10 (step 646). For each received packet, the LMS predictor 12 is updated accordingly to the normalized LMS prediction algorithm (step 648) and the buffer length Q is checked to determine if Q is below the buffer threshold L0 (step 650). If Q is greater than L0 then predict a next incoming packet arrival interval d (step 652). The interval d is compared (step 654) with the draining threshold D0 to control possible flooding where d is not greater than D0, and also to insure that the maximum playout latency T0 still remains acceptable where B is not greater than T0. If either of the conditions in step 654 is not satisfied then discard the oldest packet in the buffer 10 (step 656).

Various simulation scenarios have been tested using simulations of the adaptive prediction playout scheme of the invention. Without limiting the scope of the invention, the results of the estimated probabilistic QoS values (delay, delay jitter, loss and gap probabilities) within the range of specified operating parameter values are provided herein below. With parameter values specified as follows :

- Exponential packet arrival with the mean varying between 1.5 ms and 3ms,
- Buffer threshold L0 of 50, 55, 60, 75 or 100 packets,
- Maximum acceptable playout latency T0 of 150ms,
- Draining threshold D0 of 6ms,
- Constant packet draining rate P0 of 1 packet every 1.5 ms or 3 ms,
- Packet length of 1024 bits,
- Prediction step size $\mu$ of 0.05, and
- Sliding window size p of 1, 3, 5 or 10;

it was observed that,

- As the sliding window size increased, the packet gap or lost probabilities (varying between 0.3% and 1.1%) increased, with the most drastic deterioration occurring when the window size jumped from 1 to 3; increasing the buffer threshold decreased the values of gap or lost probabilities, which are annoying to voice users when they are too high;

- As the buffer threshold increased, the mean of queuing delay (varying between 80 ms and 148 ms) also increased proportionally; decreasing window size improved the delay with a very strong improvement occurring when window size was reduced from 3 to 1; and

- Delay jitter statistics were not collected in the initial experimentation due to the fact that their impact on voice QoS is accounted for by the packet lost or gap probabilities, and the packet draining rate (which was constant).

Although preferred embodiments of the invention have been described herein, it will be understood by those skilled in the art that variations may be made thereto without departing from the scope of the invention or the scope of the appended claims.

**Claims**

1. An apparatus for adaptive prediction playout of a talkspurt, the talkspurt comprising a series of packets received by the apparatus, the apparatus comprising:

 a buffer for buffering received packets of the talkspurt where each packet has a latency time in the buffer;

a LMS predictor using a Least Means Square algorithm for calculating a predicted next packet arrival interval after receiving each packet of the talkspurt to predict when a next packet will be received; and

a constant bit rate player for playing out the packets in the buffer at a substantially constant rate;

whereby the packet having the greatest latency in the buffer is discarded when the predicted next packet arrival interval is less than a draining threshold so that the latency of the packets in the buffer is controlled.

2. The apparatus of claim 1, wherein the constant bit rate player starts to play out the packets in the buffer on first occurrence of one of the number of packets in the buffer exceeding a predefined buffer threshold and the packet in the buffer having the greatest latency exceeding a predefined maximum acceptable playout latency.

3. The apparatus of claim 1 or 2, wherein calculating predicted next packet arrival intervals comprises:

(a) selecting an initial set of prediction filter coefficients $w(l)$ where $l = 0, 1, ..., p\text{-}1$ at the start of the talkspurt;

(b) calculating one predicted next packet arrival interval $x^{\wedge}(n+1)$ after receiving an n-th packet using prediction equation

$$\hat{x}(n+1) = \sum_{l=0}^{p-1} w(l)x(n-l) \text{ where } x(n),\ x(n\text{-}1),\ x(n\text{-}2),\ ...,\ x(n\text{-}p+1)$$

denotes a series of p received packet arrival intervals;

(c) receiving the next packet and measuring the next packet arrival interval $x(n+1)$;

(d) calculating a prediction filter coefficient $w(n+1)$ for $x(n+1)$ from the least mean square error of the difference between $x(n+1)$ and $x^{\wedge}(n+1)$;

(e) updating the prediction equation $x^{\wedge}(n+1)$ in step (b) by adding $w(n+1)$ and deleting the $w(p\text{-}1)$ and incrementing n by one for calculating the predicted next packet arrival interval; and

(f) repeat (b) to (e) after receiving each packet until the talkspurt ends.

4. The apparatus of claim 3, wherein the prediction filter coefficient $w(n+1)$ for $x(n+1)$ is calculated from the least mean square error of the difference between $x(n+1)$ and $x^{*}(n+1)$ with a weighting function to reduce the effect of the next packet arrival interval $x(n+1)$ as compared to earlier packet arrival intervals.

5. The method of claim 4, wherein the prediction filter coefficient $w(n+1)$ is $w(n) + \mu e(n)X(n)$ where $e(n)$ is $x(n+1)$ less $x^{*}(n+1)$, $X(n)$ is $[x(n), x(n\text{-}1), ... x(n\text{-}p+1)]^{T}$, and $\mu$ is a predefined step size for adjusting prediction error $e(n)$ and which $\mu$ is in the range
$1 < 1/\mu < 2/\lambda_{max}$, where $\lambda_{max}$ is the maximum eigenvalue of $\mathbf{R}_x$, where $\mathbf{R}_x$ is the autocorrelation of the vector x.

6. The method of claim 5, wherein the prediction filter coefficient $w(n+1)$ calculated from a normalized least mean square algorithm where

$$w(n + 1) = w(n) + \frac{\mu e(n)X(n)}{\|X(n)\|^2} \text{ and } \|X(n)\|^2 = X(n)^T X(n)$$

7. A method of adaptive prediction playout of a talkspurt, the talkspurt comprising a series of packets as received, the method comprising:

buffering received packets of the talkspurt where each packet has a latency in the buffer;

using a Least Means Square algorithm for calculating a predicted next packet arrival interval after receiving each packet of the talkspurt to predict when a next packet will be received; and

playing out the packets in the buffer at a substantially constant rate;

whereby the packet having the greatest latency in the buffer is discarded when the predicted next packet arrival interval is less than a draining threshold so that the latency of the packets in the buffer is controlled.

8. The method of claim 7, wherein the constant bit rate player starts to play out the packets in the buffer on first occurrence of one of the number of packets in the buffer exceeding a predefined buffer threshold and the packet in the buffer having the greatest latency exceeding a predefined maximum acceptable playout latency.

9. The method of claim 7 or 8, wherein calculating predicted next packet arrival intervals comprises

   (a) selecting an initial set of prediction filter coefficients $w(l)$ where $l = 0, 1, ..., p-1$ at the start of the talkspurt;

   (b) calculating one predicted next packet arrival interval $x^*(n+1)$ after receiving an n-th packet using prediction equation

$$\hat{x}(n+1) = \sum_{l=0}^{p-1} w(l)x(n-l) \text{ where } x(n),\ x(n-1),\ x(n-2),\ ...,\ x(n-p+1)$$

   denotes a series of p received packet arrival intervals;

   (c) receiving the next packet and measuring the next packet arrival interval $x(n+1)$;

   (d) calculating a prediction filter coefficient $w(n+1)$ for $x(n+1)$ from the least mean square error of the difference between $x(n+1)$ and $x^*(n+1)$;

   (e) updating the prediction equation $x^*(n+1)$ in step (b) by adding $w(n+1)$ and deleting the $w(p-1)$ and incrementing n by one for calculating the predicted next packet arrival interval; and

   (f) repeat (b) to (e) after receiving each packet until the talkspurt ends.

10. The apparatus of claim 9, wherein the prediction filter coefficient $w(n+1)$ for $x(n+1)$ is calculated from the least mean square error of the difference between $x(n+1)$ and $x^*(n+1)$ with a weighting function to reduce the effect of the next packet arrival interval $x(n+1)$ as compared to earlier packet arrival intervals.

11. The method of claim 10, wherein the prediction filter coefficient $w(n+1)$ is $w(n) + \mu e(n)X(n)$ where $e(n)$ is $x(n+1)$ less $x^*(n+1)$, $X(n)$ is $[x(n), x(n-1), ... x(n-p+1)]^T$, and $\mu$ is a predefined step size for adjusting prediction error $e(n)$ and which $\mu$ is in the range
   $1 < 1/\mu < 2/\lambda_{max}$, where $\lambda_{max}$ is the maximum eigenvalue of $\mathbf{R}_x$ where $\mathbf{R}_x$ is the autocorrelation of the vector x.

12. The method of claim 11, wherein the prediction filter coefficient $w(n+1)$ calculated from a normalized least mean square algorithm where

$$w(n+1) = w(n) + \frac{\mu e(n)X(n)}{\|X(n)\|^2} \text{ and } \|X(n)\|^2 = X(n)^T X(n)$$

## Figure 1

Voice source behavior

## Figure 2

Linear Predictor

## Figure 3

Adaptive linear predicitor

# Figure 4

Flowchart of LMS prediction algorithm

```
┌─────────────────────────────────┐
│  Estimate w (n), at beginning n=0 │
│              400                  │
└─────────────────────────────────┘
                 │
                 ▼
┌─────────────────────────────────┐
│            Get x (n)              │
│              405                  │              ⌐435
└─────────────────────────────────┘
                 │
                 ▼
┌─────────────────────────────────┐
│         Predict x(n+1)            │
│              410                  │
└─────────────────────────────────┘
                 │
                 ▼
┌─────────────────────────────────┐
│      Get actual value x(n+1)      │
│              415                  │
└─────────────────────────────────┘
                 │
                 ▼
┌─────────────────────────────────┐
│  Compute e(n) using equation (3.3)│
│              420                  │
└─────────────────────────────────┘
                 │
                 ▼
┌─────────────────────────────────┐
│  Update w(n+1) using equation (3.8) or│
│   alternately (3.7b)    425       │
└─────────────────────────────────┘
                 │
                 ▼
┌─────────────────────────────────┐
│   Update x(n) by adding x(n+1)    │
│              430                  │
└─────────────────────────────────┘
```

# Figure 5

A block diagram of an adaptive prediction playout mechanism

Prediction

LMS Prediction  12

Playout / Discard

Packet

CBR  14

**Smoothing Buffer**

10

# Figure 6A

```
                    ┌──────────────┐
              ┌────▶│  Wait 600    │
              │     └──────┬───────┘
              │            │
              │            ▼
              │     ┌──────────────────┐
              │     │ Receive Talkspurt 610 │
              │     └──────┬───────────┘
              │            │
   ┌──────────┼────────────┼────────────────────────────┐
   │          │            ▼                             │
   │          │     ┌──────────────────┐                 │
   │          │     │ Receive packet and   622 │◀──┐     │
   │          │     │ add to Buffer        │    │     │
   │          │     └──────┬───────────┘    │     │
   │          │            │                │     │
   │          │            ▼                │     │
   │          │        ╱────────────╲        │     │
   │          │       ╱  Q>L0 or B > T0 ╲  No │     │     620
   │          │       ╲     624        ╱──────┘     │
   │          │        ╲────────────╱               │
   │          │            │                        │
   │          │           Yes                       │
   └──────────┼────────────┼────────────────────────┘
   ┌──────────┼────────────┼────────────────────────────┐
   │          │            ▼                             │
   │          │     ┌──────────────────┐                 │
   │          │     │ Playout of oldest    642 │◀──┐     │
   │          │     │ packet in Buffer     │    │     │
   │          │     └──────┬───────────┘    │     │
   │          │            │                │     │     640
   │          │            ▼                │     │
   │     Yes  │        ╱────────────╲    No │     │
   └──────────┘       ╱  Last Packet  ╲─────┘     │
                      ╲     644        ╱           │
                       ╲──────────────╱            │
   └──────────────────────────────────────────────┘
```

## Figure 6B

```
          ┌─────────────────┐
          │ Receive packet and │  ──── 646
          │  add to Buffer    │
          └─────────────────┘
                  │
                  ▼
          ┌─────────────────┐
          │     Update       │  ──── 648
          └─────────────────┘
                  │
                  ▼
   NO         ◇ Q>LO? ◇        ──── 650
  ◄───────
                  │ YES
                  ▼
          ┌─────────────────┐
          │     Predict      │  ──── 652
          └─────────────────┘
                  │
                  ▼
   YES     ◇ d<D0 or B >T0? ◇  ──── 654
  ◄───────
                  │ NO
                  ▼
          ┌─────────────────┐
          │ Discard oldest   │  ──── 656
          │ packet in Buffer │
          └─────────────────┘
```